Europäisches Patentamt

European Patent Office

Office européen des brevets

(19)

(11) **EP 1 092 149 B1**

(12) **FASCICULE DE BREVET EUROPEEN**

(45) Date de publication et mention
de la délivrance du brevet:
**25.08.2004 Bulletin 2004/35**

(21) Numéro de dépôt: **99926575.4**

(22) Date de dépôt: **30.06.1999**

(51) Int Cl.$^7$: **G01N 29/02**

(86) Numéro de dépôt international:
**PCT/FR1999/001574**

(87) Numéro de publication internationale:
**WO 2000/002040 (13.01.2000 Gazette 2000/02)**

(54) **DISPOSITIF ET PROCEDE DE DETERMINATION D'UNE VITESSE DE PROPAGATION D'UNE ONDE ACOUSTIQUE DANS UN MELANGE DIPHASIQUE**

VORRICHTUNG UND VERFAHREN ZUR BESTIMMUNG EINER AUSBREITUNGSGESCHWINDIGKEIT EINER AKUSTISCHEN WELLE IN EINEM ZWEI-PHASEN-GEMISCH

DEVICE AND METHOD FOR DETERMINING A PROPAGATION VELOCITY OF A SOUND WAVE IN A DIPHASIC MIXTURE

(84) Etats contractants désignés:
**DE GB**

(30) Priorité: **01.07.1998 FR 9808404**

(43) Date de publication de la demande:
**18.04.2001 Bulletin 2001/16**

(73) Titulaires:
• **COMMISSARIAT A L'ENERGIE ATOMIQUE**
**75752 Paris Cédex 15 (FR)**
• **COMPAGNIE GENERALE DES MATIERES NUCLEAIRES**
**78140 Velizy Villacoublay (FR)**

(72) Inventeurs:
• **ROUDIL, Danièle**
**F-30330 Tresques (FR)**

• **MALZIEU, Francis**
**F-84420 Piolenc (FR)**
• **DESPAUX, Gilles**
**F-34830 Clapiers (FR)**
• **ATTAL, Jacques**
**F-34980 Saint-Clement-de-Rivière (FR)**
• **COMBETTE, Philippe**
**F-34090 Montpellier (FR)**

(74) Mandataire: **Weber, Etienne Nicolas et al**
**c/o Brevatome,**
**3, rue du Docteur Lancereaux**
**75008 Paris (FR)**

(56) Documents cités:
**EP-A- 0 671 547          WO-A-94/04907**

**Description**

Domaine technique

La présente invention concerne un dispositif et un procédé permettant d'établir des paramètres physiques d'un mélange diphasique par propagation d'une onde acoustique dans la phase continue du mélange. L'invention permet, par exemple de déterminer le temps de propagation d'une onde acoustique dans la phase continue du mélange diphasique. Le dispositif permet notamment de mesurer l'impédance acoustique de cette phase, sa densité ainsi que la vitesse de propagation de l'onde acoustique dans la phase continue.

On entend par mélange diphasique, au sens de l'invention, toute émulsion ou dispersion dans laquelle une première solution ou première phase, se présente sous la forme d'une phase continue, et une deuxième phase, solide, liquide ou gazeuse, se présente sous forme de gouttes ou de particules dispersées dans la phase continue. La deuxième phase est appelée phase dispersée.

Un tel mélange diphasique est mis en oeuvre notamment pour séparer des éléments chimiques en solution. Le procédé de séparation consiste pour l'essentiel à mettre en contact une première solution contenant les éléments chimiques, avec une deuxième solution qui joue un rôle d'extractant. Cette mise en contact est destinée à permettre un transfert de matière entre les deux solutions.

Le transfert de matière est favorisé par la formation d'un mélange diphasique sous forme d'une émulsion ou d'une dispersion de fines gouttelettes. Une décantation permet de séparer enfin les liquides après le transfert de matière.

On connaît différents dispositifs de séparation fonctionnant selon le procédé mentionné ci-dessus. Parmi ceux-ci, on peut citer des dispositifs du type mélangeur-décanteur, du type extracteur centrifuge, ou des dispositifs à colonne pulsée.

L'invention peut être mise en oeuvre dans l'analyse des propriétés physiques ou chimiques d'un mélange diphasique en permettant d'effectuer, notamment, le suivi de paramètres essentiels pour une telle analyse qui soit d'une part, la vitesse de propagation d'une onde acoustique dans la phase continue du mélange et d'autre part sa densité. En effet, une modification de la vitesse de propagation est enregistrée lorsque la densité de la phase continue se modifie. Une telle modification de densité traduit, par exemple, un transfert de matière entre les phases.

L'invention trouve des applications dans l'industrie pétrolière, pharmaceutique, chimique, agrochimique, dans le traitement des déchets radioactifs et' plus généralement, dans tous les domaines nécessitant la caractérisation d'une émulsion.

Etat de la technique antérieure

Lors de la mise en oeuvre d'un procédé de séparation on surveille généralement le mélange diphasique, notamment en déterminant la proportion de chaque phase dans le mélange.

Le document (1) dont la référence est précisée à la fin de la description décrit en particulier un procédé de mesure de la fraction volumique de l'une ou l'autre des phases d'un mélange diphasique constitué par une première phase $F_1$ maintenue à l'intérieur d'un récipient, à l'état de dispersion dans une deuxième phase $F_2$. Selon ce procédé, après avoir déterminé préalablement la vitesse $v_1$ de propagation d'un signal ultrasonore dans la phase $F_1$ et la vitesse $v_2$ de propagation d'un signal ultrasonore dans la phase $F_2$, on émet un signal ultrasonore en un point $P_1$ dudit récipient, on détecte ensuite le passage dudit signal en un point $P_2$ dudit récipient situé à une distance d du point $P_1$, on détermine le temps t mis par ledit signal pour parcourir la distance d et l'on calcule la fraction volumique $\varepsilon_1$ de la phase $F_1$ et/ou la fraction volumique $\varepsilon_2$ de la phase $F_2$ à partir des formules :

$$\varepsilon_1 = \frac{v_1}{d} \cdot \frac{v_2 t - d}{v_2 - v_1}$$

et

$$\varepsilon_2 = \frac{v_2}{d} \cdot \frac{v_1 t - d}{v_1 - v_2}$$

Le document (2), dont la référence est également précisée à la fin de la description, concerne un procédé similaire mettant également en oeuvre une méthode de mesure d'un temps de propagation d'une onde acoustique dans un mélange diphasique.

Le calcul de la fraction volumique de l'une ou l'autre des phases nécessite d'établir, comme dans le cas du document (1), les vitesses de propagation ($v_1$, $v_2$) de l'onde acoustique dans chacune des phases.

Ainsi, le document (2) prévoit de mesurer, avant d'effectuer le mélange, la vitesse de propagation de l'onde dans chacun des liquides devant être mélangés.

Une difficulté dans la mesure de la fraction volumique de l'une ou l'autre des phases tient au fait que les vitesses de propagation ou les temps de propagation ne restent pas constants au cours de la séparation. Ces paramètres sont en effet influencés non seulement par des modifications de température mais aussi par des modifications de densité des phases, liées au transfert de matière.

L'évolution des vitesses ou des temps de propagation en fonction de la température peut être établie et prise en compte sans grande difficulté.

Pour tenir compte de l'évolution des vitesses ou des temps de propagation en fonction des échanges de matière d'une phase à l'autre deux voies sont actuellement possibles.

Une première voie consiste à prélever au cours du traitement de séparation un petit volume d'émulsion et d'effectuer des mesures de vitesse ou de temps de propagation acoustique séparément dans chacune des phases après les avoir laissées décanter.

Cette première possibilité présente cependant des inconvénients. En effet, le prélèvement d'émulsion risque de perturber le fonctionnement du dispositif de séparation. De plus, le prélèvement n'est possible que si le dispositif de séparation contient un volume suffisant de mélange. Par ailleurs, le volume prélevé doit être réinjecté dans le dispositif dé séparation ou doit être stocké après chaque mesure.

Enfin, dans le cas ou le mélange diphasique contient des corps fortement radioactifs, l'extraction et le stockage d'échantillons de mesure peut s'avérer irréalisable.

Une deuxième voie pour établir les vitesse -ou temps de propagation des ondes séparément dans chacune des phases lors de traitement, consiste à aménager dans le dispositif de séparation des chambres de décantation, au voisinage d'une zone de mélange. Ces chambres de décantation "in situ" sont cependant susceptibles de modifier le comportement hydraulique du dispositif et de modifier localement les caractéristiques du mélange diphasique.

Ces mêmes dispositifs sont utilisés également pour la mesure en ligne de la densité de la phase continue.

Exposé de l'invention

La présente invention a pour but de proposer un procédé et un dispositif permettant d'établir des paramètres physiques tels que la vitesse de propagation d'une onde acoustique dans la phase continue d'un mélange diphasique, l'impédance acoustique de la phase continue et/ou sa densité, et ne présentant pas les difficultés mentionnées ci-dessus.

Un but est en particulier de permettre de telles mesures en continu, sans interrompre le procédé de séparation et sans prélever d'échantillons de mélange diphasique.

Un but est encore de proposer un dispositif et un procédé non intrusifs, qui n'influent aucunement sur le fonctionnement hydraulique d'un équipement de séparation et qui ne modifient pas les caractéristiques du mélange diphasique.

Pour atteindre ces buts, l'invention a plus précisément pour objet un dispositif de mesure d'un temps de propagation d'une onde acoustique dans une phase continue d'un mélange diphasique, le dispositif comportant un transducteur électroacoustique apte à émettre des ondes acoustiques et délivrer un signal de réception d'ondes acoustiques réfléchies, et des moyens d'exploitation des signaux du transducteur aptes à établir un temps de propagation des ondes à partir des signaux délivrés par le transducteur. Le dispositif comporte en outre des moyens de focalisation des ondes acoustiques en une zone de focalisation et la fréquence des ondes acoustiques est ajustée pour provoquer une réflexion des ondes sur des gouttes de la phase dispersée, situées sensiblement dans la zone de focalisation.

La longueur d'onde λ de l'onde acoustique produit par le transducteur électroacoustique est telle que :

$$\lambda = \frac{V_c}{f}$$

Dans cette équation $V_c$ représente la vitesse de propagation de l'onde dans la phase continue et f représente la fréquence de l'onde.

Une goutte de la phase dispersée, présente sensiblement dans la zone de focalisation provoque à cet endroit une perturbation locale de l'impédance acoustique du milieu traversé. L'impédance acoustique d'un milieu est définie ici comme le produit de sa masse volumique par la vitesse de propagation des ondes dans celui-ci.

L'onde acoustique peut être réfléchie par une goutte de la phase dispersée présente dans la zone de focalisation et l'énergie du signal acoustique réfléchi est proportionnelle à la différence entre les impédances acoustiques de la phase dispersée et de -la phase continue. Une réflexion efficace est obtenue . lorsque le diamètre des gouttes est supérieur à la longueur d'onde λ.

A partir d'une estimation de la vitesse $V_c$, il est ainsi possible de déterminer la fréquence minimale en fonction du diamètre φ des plus petites gouttes présentes de façon significative dans le mélange diphasique. La fréquence est ajustée, par exemple, pour fixer la longueur d'onde λ telle que λ=φ/5.

L'utilisation d'un transducteur ultrasonore, fonctionnant à une fréquence élevée, par exemple supérieure à 100 MHz permet de garantir la production de réflexions sur les gouttes, même dans le cas d'une évolution importante du mélange diphasique. La taille des gouttes dans un dispositif de séparation évolue en effet en fonction des conditions de fonctionnement et du taux de rétention de la phase continue.

La distance de focalisation de l'onde acoustique est choisie de préférence comme un compromis entre un diamètre minimal de gouttes pouvant être mesuré pour une fréquence donnée et l'atténuation de l'onde dans la phase continue. Ceci permet de déterminer avec une bonne précision le temps de propagation, et de disposer d'une probabilité raisonnable, pendant un temps de mesure, du passage dans la zone de focalisation d'une goutte, en tenant compte d'une distance moyenne entre les gouttes.

La distance de focalisation est par exemple de l'ordre du millimètre.

La fréquence de l'onde acoustique peut également être optimisée en fonction de l'atténuation du milieu.

Le temps de propagation dans la phase continue d'une onde qui est réfléchie sur une goutte située dans la zone de focalisation correspond au temps mis pour parcourir deux fois la distance focale des moyens de focalisation.

Ainsi, les moyens d'exploitation des signaux du dispositif de l'invention peuvent être prévus pour établir la vitesse $V_c$ de propagation de l'onde dans la phase continue selon la formule

$$V_C = \frac{2F}{T}$$

Dans cette formule F est la distance focale des moyens de focalisation et T le temps de propagation.

Les moyens de focalisation peuvent comporter, par exemple, une lentille acoustique présentant une première face recevant le transducteur électroacoustique et une deuxième face, présentant au moins une portion concave avec un rayon de courbure R, tournée vers le mélange, et désignée par face d'émission. Cette face d'émission est destinée à focaliser les ondes acoustiques vers la zone de focalisation. Lors de l'émission d'une onde acoustique une première réflexion partielle a lieu sur la face d'émission puis, éventuellement, une deuxième série de réflexions a lieu sur une goutte présente dans la zone de focalisation.

Ainsi, selon un aspect particulier de l'invention, les moyens d'exploitation des signaux peuvent être prévus pour établir un temps de retard entre un premier signal de réflexion sur la face d'émission de la lentille et un deuxième signal de réflexion sur une goutte de phase dispersée, en réponse à une même onde acoustique émise. Le temps -de propagation de l'onde qui parcourt deux fois la distance focale F de la lentille est alors égal à ce temps de retard.

Le calcul de la vitesse de propagation de l'onde acoustique peut être effectué à partir de la distance focale F selon l'équation $V_C = \frac{2F}{T}$ indiquée ci-dessus, ou en approximation paraxiale à partir du rayon de courbure R de la face d'émission et de la vitesse de propagation $V_v$ dans le matériau de la lentille.

On a en effet

$$F = \frac{R}{1 - V_C / V_V} = \frac{V_C \cdot T}{2}$$

ainsi, $V_c^2 - V_c \cdot V_v + 2 \cdot R \cdot V_v / T = 0$.

A partir de cette équation, on peut calculer $V_c$ (dans le verre $V_v \simeq 5968\,m.s^{-1}$).

L'amplitude du signal délivré par le transducteur est d'autant plus grande que la goutte a une impédance acoustique différente par rapport au liquide constituant la phase continue. En effet, dans une première approximation, on admet que la goutte peut être représentée par un disque plan qui passe devant la zone de focalisation. On suppose que la dimension de la goutte est beaucoup plus grande que la longueur d'onde acoustique. Dans ce cas le plus favorable, on modélise le signal recueilli par la fonction

$$V(z) = \int_0^{\theta_0} R(\theta)P(\theta) \cos\theta\, e^{kz \cos\theta}\, d\theta$$

dans laquelle V(z) représente le signal de sortie lorsque la goutte se déplace sur un axe de la lentille acoustique d'une distance z, R(θ) est le pouvoir réflecteur de la goutte, θ l'angle d'incidence sous lequel la goutte reçoit l'onde acoustique, P(θ) est une fonction qui correspond à l'ouverture de la lentille (fonction pupille), k le vecteur d'onde dans le milieu continu et θ0 le demi-angle d'ouverture de la lentille (≃50°). Le maximum d'amplitude du signal est obtenu lorsque la goutte se trouve dans le plan focal ou à son voisinage. Cette caractéristique permet de déterminer avec précision le temps de vol T entre la face d'émission de la lentille et la zone de focalisation. Le temps de propagation est établi dé préférence en tenant compte d'un grand nombre de passages de gouttes au voisinage de la focale.

Selon une réalisation particulière de la lentille acoustique, sa face d'émission peut comporter au moins une portion concave, apte à focaliser les ondes acoustiques et une portion plane apte à réfléchir les ondes non focalisées.

La réalisation de la face d'émission avec une partie plane, bien que non indispensable permet de mesurer avec une meilleure acuité les réflexions des ondes non focalisées sur cette partie. Ce point est décrit plus en détail dans la suite du texte.

Selon un perfectionnement la face d'émission de la lentille acoustique peut en outre être recouverte d'une fine couche de matériau antireflet dont l'épaisseur est sensiblement égale à $\lambda_0/4$ où $\lambda_0$ est la longueur d'onde acoustique. De plus, l'impédance acoustique $Z_a$ de la couche de matériau antireflet peut être choisie égale à $Z_a = \sqrt{Z_L.Z_C}$ où $Z_L$ est l'impédance acoustique du matériau (par exemple le verre) de la lentille acoustique et $Z_C$ l'impédance estimée de la phase continue.

Le revêtement antireflet a une double fonction d'améliorer la détermination d'un pouvoir de réflexion de la phase continue (décrit plus loin) par la partion plane de la face d'émission et de corriger un astigmatisme de convergence de la partie concave de la face d'émission.

Il convient de préciser que l'utilisation d'une lentille acoustique n'est pas le seul moyen possible pour focaliser l'onde acoustique. Ainsi, à titre de variante, le transducteur peut être un transducteur du type segmenté comprenant une pluralité d'éléments de transducteur (capteurs) pouvant être excités séparément. Ces éléments, individuellement pilotés par des circuits électroniques adaptés permettent de focaliser directement l'onde acoustique produite. Ils peuvent constituer ainsi les moyens de focalisation au sens de l'invention.

Selon une application particulière de l'invention, le procédé peut être mis. en oeuvre pour mesurer la vitesse de propagation d'une onde acoustique dans la phase continue d'un mélange diphasique comprenant une phase continue et une phase dispersée formant des gouttes dans la phase continue. Selon ce procédé,

- on émet dans la phase continue des ondes acoustiques focalisées en une zone de focalisation, l'onde acoustique ayant une fréquence ajustée pour permettre une réflexion sur des gouttes de la phase dispersée, situées sensiblement dans la zone de focalisation,
- on enregistre des premiers signaux de réflexion des ondes sur les gouttes,
- on établit un temps de propagation de l'onde à partir des signaux de réflexion, et
- on calculé la vitesse de propagation à partir -du temps de propagation et de la distance de focalisation des ondes acoustiques.

Selon une autre application particulière de l'invention, les signaux réfléchis peuvent également être exploités pour déterminer le pouvoir réflecteur de la phase continue. Ce pouvoir réflecteur est défini comme le rapport de l'amplitude des signaux réfléchis sur l'amplitude des signaux acoustiques émis.

A cet effet, on peut enregistrer des deuxièmes signaux de réflexion d'une onde acoustique, réfléchie à une interface entre la lentille acoustique du transducteur électroacoustique et la phase continue.

De préférence pour la détermination du pouvoir réflecteur $R_c$ on peut se servir de signaux de réflexion provenant de la portion plane de la face d'émission, et qui correspondent à une onde non focalisée .

L'enregistrement et la mesure de l'amplitude des signaux peuvent être faits avec un simple oscilloscope, par exemple.

Le pouvoir réflecteur $R_c$ de la phase continue peut être directement déterminé à partir de l'amplitude des signaux, par exemple en fonction d'une courbe d'étalonnage préétablie (et sensiblement linéaire).

La courbe d'étalonnage peut être établie en plongeant la lentille dans des fluides dont le pouvoir réflecteur est connu, tels que l'air ou l'eau par exemple, et de mesurer l'amplitude des ondes réfléchies par ces fluides.

Selon une autre possibilité, le pouvoir réflecteur de la phase continue peut être déterminé comme le rapport de l'amplitude des signaux réfléchis depuis la phase continue, sur l'amplitude des signaux émis.

L'amplitude et donc l'énergie des signaux émis peuvent être connues à partir d'une réflexion additionnelle et partielle des signaux sur un dioptre de référence. Cet aspect sera exposé plus en détail dans la suite de la description.

Selon un autre aspect de l'invention, on peut établir également, en connaissant le pouvoir réflecteur $R_c$ de la phase continue, une impédance acoustique $Z_C$ de la phase continue à partir de la formule :

$$Z_C = Z_L \frac{1 - R_C}{1 + R_C},$$

où $Z_L$ est une impédance acoustique (connue) du matériau de la lentille acoustique.

Dans le cas où une couche antireflet d'impédance acoustique $Z_a$ équipe la lentille acoustique, on a :

$$Z_C^2 = Z_L . Z_a . \frac{1 - R_C}{1 + R_C}$$

Selon encore un autre aspect de l'invention, on peut également établir la densité $\rho_C$ de la phase continue selon la formule :

$$\rho_C = \frac{Z_C}{V_C} .$$

Le pouvoir réflecteur $R_D$ entre la phase continue et la phase dispersée peut également être déterminé à partir d'une mesure de l'amplitude maximale desdits premiers signaux de réflexion, c'est-à-dire les signaux correspondant à une réflexion sur des gouttes de la phase dispersée.

Dans ce cas la valeur de $R_D$ est également obtenue en confrontant l'amplitude des premiers signaux de réflexion à une courbe d'étalonnage préétablie avec des dispersions ou des milieux de propriétés connues.

Finalement, en connaissant l'impédance acoustique de la phase continue et le pouvoir réflecteur $R_D$, il est possible de calculer l'impédance acoustique $Z_D$ de la phase dispersée à partir de l'équation suivante :

$$Z_D = Z_C \frac{1 - R_D}{1 + R_D} .$$

Dans cette équation $Z_C$ est l'impédance de la phase continue déterminée au préalable de la façon décrite ci-dessus.

D'autres caractéristiques et avantages de la présente invention ressortiront mieux de la description qui va suivre, en référence aux figures des dessins annexés. Cette description est donnée à titre purement illustratif et non limitatif.

Brève description des figures

- La figure 1 est une coupe schématique d'un transducteur électroacoustique avec une lentille acoustique, le transducteur étant utilisable dans un dispositif conforme à l'invention.
- La figure 2 montre le capteur de la figure 1 en présence d'une goutte dans une zone de focalisation de la lentille.
- La figure 3 représente un enregistrement de signaux de réflexion sur une goutte et sur une face avant de la lentille, délivrés par le transducteur de la figure 2.
- La figure 4 montré un tronçon de colonne pulsée, équipé d'un dispositif conforme à l'invention.
- La figure 5 est un graphique représentant, au cours du temps les signaux délivrés par le transducteur d'un dispositif conforme à l'invention.
- La figure 6 est une coupe schématique d'un transducteur acoustique utilisable dans un dispositif conforme à l'invention et constituant une variante par rapport au transducteur de la figure 1.
- La figure 7A est une représentation schématique simplifiée des signaux reçus par une première voie du transducteur de la figure 6, et
- La figure 7B est une représentation schématique simplifiée des signaux reçus par une deuxième voie du transducteur de la figure 6.

Description détaillée de modes de mise en oeuvre de l'invention

Pour des raisons de simplification, dans la description qui suit, des éléments identiques, similaires ou équivalents des différentes figures portent les mêmes références.

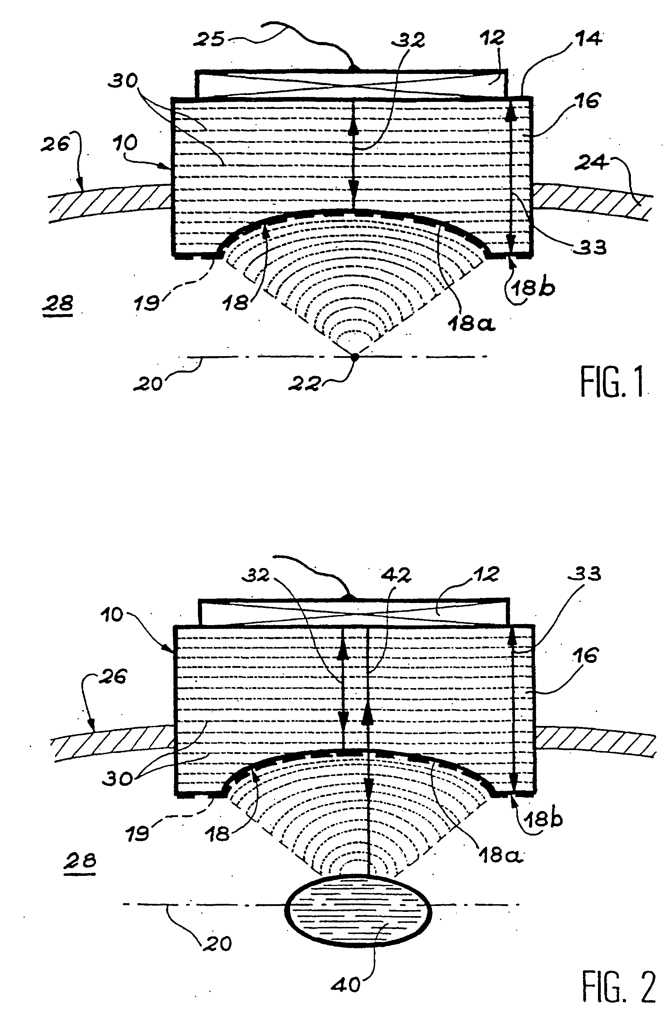

La référence 10 de la figure 1 désigne de façon générale un transducteur électroacoustique pouvant équiper un dispositif conforme à l'invention.

Le transducteur 10 comporte un dispositif électroacoustique 12, tel que, par exemple, un dispositif piézo-électrique, fixé sur une. première face, dite face arrière 14 d'une ligne à retard 16.

La ligne à retard est par exemple un bloc cylindrique en un matériau n'absorbant pas les ondes acoustiques, tel que du verre. Il présente une deuxième face appelée face d'émission 18 dont une portion 18d présente une concavité avec un rayon de courbure R, destinée à focaliser les ondes acoustiques et dont une portion 18b est plane. La ligne à retard constitue ainsi une lentille acoustique. La ligne à retard est désignée par "lentille acoustique" dans la suite du texte. Un revêtement 19 antireflet en un matériau tel que du polytétrafluoroéthylène (Téflon) ou du silicone recouvre la face d'émission 18 de la lentille acoustique.

Une ligne 20 en trait discontinu représente un plan focal passant par le point focal 22 de la lentille acoustique 16. La distance focale mesurée entre la face d'émission 18 et le point focal est par exemple de 1 mm.

Le transducteur acoustique 10 est logé par exemple dans la paroi 24 d'un dispositif de séparation 26 de façon que la face d'émission 18 de la lentille acoustique 16 soit tournée vers l'intérieur du dispositif de séparation qui contient un mélange diphasique 28.

Le mélange diphasique 28 contient par exemple une phase continue de $HNO_3$ à la quelle est mélangée une phase dispersée de TBP (tributyl phosphate) à 30% dans du dodécane sous la forme de gouttelettes.

Dans d'autres applications, la phase dispersée peut comporter également des particules solides ou des bulles de gaz.

Le transducteur électroacoustique 12 est relié par des fils 25 à des dispositifs électriques extérieurs non représentés sur la figure 1, qui permettent d'appliquer au transducteur un signal d'excitation et de mesurer sur le transducteur un ou plusieurs signaux de réception.

Lorsqu'un signal électrique d'excitation est appliqué au dispositif piézo-électrique 12, celui-ci émet une onde acoustique représentée schématiquement avec la référence 30.

L'onde acoustique se propage à travers la lentille pour être focalisée au point focal 22. Par ailleurs, comme le montrent deux doubles flèches 32 et 33, une partie de l'onde est réfléchie sur la face d'émission 18 de la lentille 16 et retourne vers le transducteur.

La partie de l'onde transmise dans le mélange diphasique 28 n'est par contre pas réfléchie.

Le dispositif piézo-électrique 12 fonctionne selon une succession de phases d'émission et de phases de réception.

Lors d'une phase d'émission dont la durée est, par exemple, de l'ordre de 30 ns, le transducteur émet une onde répondant à un signal d'excitation, de préférence impulsionnel. le signal présente par exemple une fréquence de 100 MHz.

Pendant une phase de réception, dont la durée est par exemple de l'ordre de 150 ns, le transducteur délivre un signal de réception correspondant aux ondes réfléchies qu'il détecte.

La figure 2 montre le capteur 10 de la figure 1 dans une situation dans laquelle une goutte 40 se situe dans une zone de focalisation, c'est-à-dire sensiblement au point focal.

L'onde acoustique émise par le dispositif piézo-électrique est alors réfléchie non seulement par la face d'émission 18 de la lentille 16, comme le montrent les doubles flèches 32 et 33, mais aussi par la goutte 40.

Sur la figure 2, une double flèche 42 désigne l'onde émise par le transducteur qui est focalisée sur la goutte 40, et une onde réfléchie, ou écho, provenant de la goutte 40.

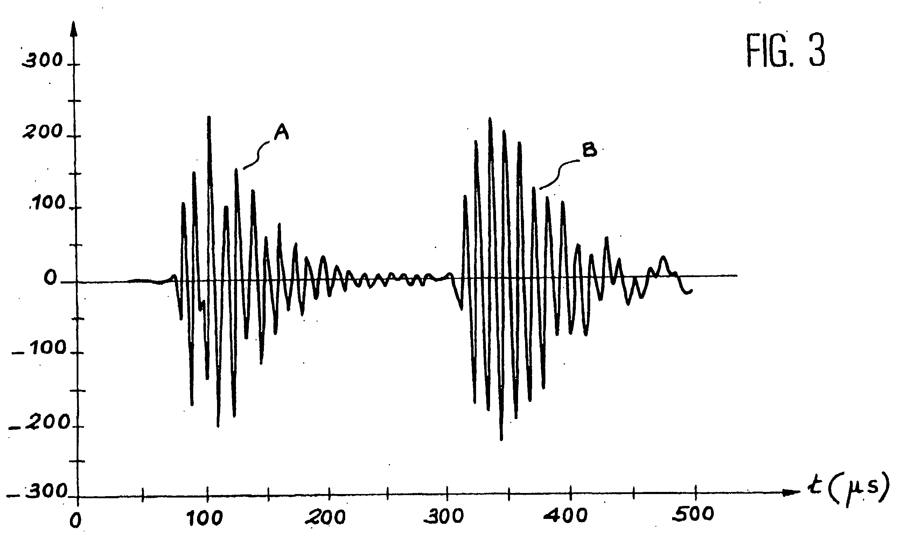

La figure 3 montre de façon simplifiée des enregistrements de signaux correspondant à des ondes réfléchies sur la face avant de la lentille acoustique, et en partie sur la portion plane de cette face et sur une goutte de la phase dispersée. La figure 3 indique en ordonnée, et en échelle arbitraire, l'amplitude des signaux. Le temps (en $\mu s$) est reporté en abscisse.

La référence A de la figure 3 désigne un premier signal correspondant à la réflexion sur la portion concave de la face avant de la lentille.

La référence B de la figure 3 désigne un second signal correspondant à la réflexion sur la portion plane de la face avant de la lentille.

L'amplitude maximale des signaux A et B permet d'établir directement le pouvoir de réflexion $R_C$ de la phase continue à une interface lentille/phase continue.

De façon similaire, la mesure de l'amplitude maximale des signaux de réflexion sur une goutte de dispersion (non visibles sur la figure 3), c'est-à-dire à une interface phase continue/dispersion, permet d'établir le pouvoir réflecteur de la dispersion à cette interface.

La relation entre l'amplitude maximale des signaux et des pouvoirs de réflexion dépend essentiellement du gain des appareils de mesure, tels que l'oscilloscope, et peut être établi à partir d'échantillons de matériaux dont le pouvoir réflecteur est connu.

Comme mentionné précédemment, la connaissance des pouvoirs de réflexion permet de calculer les impédances acoustiques des phases.

Puis, la connaissance de ces impédances, combinée avec celle de la vitesse de propagation de l'onde acoustique dans la phase continue permet d'établir sa densité.

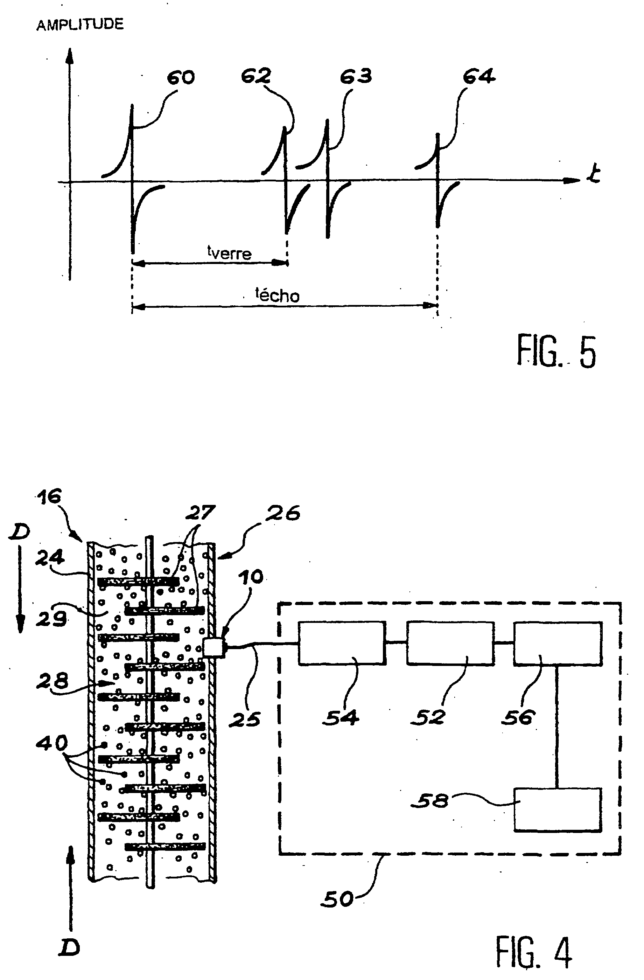

La figure 4, décrite ci-après montre une utilisation possible du dispositif de l'invention.

Sur cette figure, la référence 26 désigne un tronçon d'une colonne pulsée avec des plateaux perforés de brassage 27, dans laquelle deux phases liquides sont mises en circulation en sens inverse afin de former un mélange diphasique 28. Le mélange contient une phase continue 29 dans laquelle se déplacent des gouttes 40 d'une phase dispersée. Le sens de déplacement des gouttes 40 est repéré avec une flèche D.

Un transducteur 10, tel que décrit en référence aux figures précédentes est ménagé dans la paroi 24 de la colonne pulsée et est reliée par des fils 25 à une chaîne 50 de génération d'impulsions et d'exploitation des signaux.

La chaîne 50 comporte un générateur à ultrasons 52 capable de délivrer des impulsions électriques de haute fréquence au dispositif piézo-électrique du transducteur 10. Le générateur à ultrasons peut être relié si nécessaire au capteur par l'intermédiaire d'un circuit d'adaptation d'impédance 54.

Les signaux de réception d'échos, délivrés par le dispositif piézo-électrique sont dirigés par l'intermédiaire également du circuit d'adaptation d'impédance 54 vers un oscilloscope 56 et vers des moyens de calcul 58. L'oscilloscope 56 permet de visualiser les signaux. Les moyens de calcul 58, par exemple un ordinateur, permettent de calculer à tout moment la vitesse de propagation des ondes dans la phase continue.

La figure 5 est un graphique montrant, à titre d'exemple, de façon schématique et simplifiée par rapport à la figure 4, les signaux pouvant être enregistrés avec le dispositif de la figure 4.

Les échelles de la figure 5 sont arbitraires.

La référence 60 indique une impulsion qui correspond à l'émission d'une onde par le dispositif piézo-électrique.

Les références 62 et 63 indiquent un premier et un deuxième échos correspondant respectivement à la réflexion partielle de l'onde émise sur la portion plane et la portion convexe de la surface d'émission de la lentille.

La référence 64 indique un troisième écho d'amplitude maximum correspondant à une réflexion de l'onde sur une goutte.

Comme indiqué précédemment, l'amplitude de l'écho 62 contient l'information sur le pouvoir réflecteur de la phase continue par rapport au verre. De même, l'amplitude de l'écho 64 contient l'information sur le pouvoir réflecteur entre les deux phases.

Une durée indiquée par $t_{verre}$ entre l'impulsion 60 et le premier écho 62 correspond au temps mis par l'onde pour effectuer un aller-retour du dispositif piézo-électrique à la face d'émission de la lentille.

Une durée indiquée par $t_{écho}$ correspond au temps mis par l'onde pour effectuer un aller-retour du dispositif piézo-électrique à la goutte située au point focal.

A priori, pour établir le temps de propagation de l'onde dans la phase continue, il est possible de retrancher à la durée $t_{écho}$ une quantité fixe prédéterminée correspondant au passage de l'onde dans les moyens de focalisation (lentille).

Pour s'affranchir des variations de propagation dans la lentille, le temps de propagation T est mesuré de préférence entre le deuxième écho 63 et le troisième écho 64.

On a ainsi $T=t_{écho}-t_{verre}$.

Pour calculer le temps de propagation et la vitesse de propagation, il est possible de ne tenir compte que d'un nombre réduit de mesures (émission-réception d'une onde).

La précision du résultat est cependant amélioré en effectuant un calcul statistique sur un grand nombre de mesures.

Il est par exemple possible d'enregistrer les échos successifs obtenus à partir de l'émission de 500.000 impulsions acoustiques.

A partir de ces mesures, on peut calculer une durée moyenne $t_{écho}$ correspondant à l'enregistrement des échos d'amplitude maximum.

A partir d'un tel traitement statistique une précision relative de la mesure du temps de propagation et du calcul de la vitesse de propagation, peut être meilleure que 0,5%.

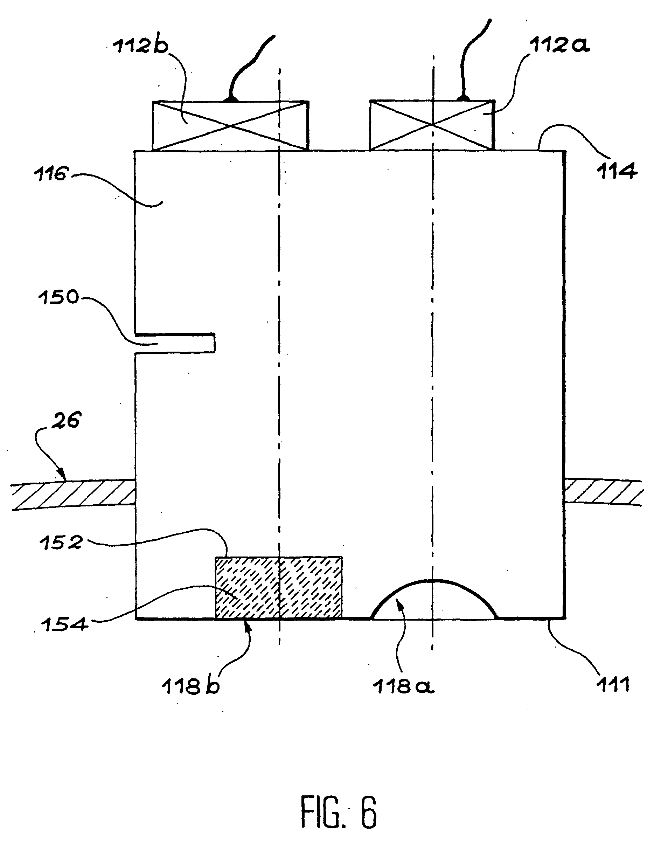

La figure 6 montre un transducteur acoustique perfectionné susceptible d'équiper le dispositif de mesure de l'invention. Celui-ci comporte une lentille acoustique 116 avec une face avant 111 destinée à être mise en contact avec le mélange diphasique dont on veut mesurer les caractéristiques. La lentille 116 présente des caractéristiques comparables à celles de la lentille 16 décrite en référence à la figure 1.

La face avant 111 présente une première partie 118a, concave, capable de focaliser des ondes acoustiques dans le mélange diphasique. Cette partie concave est comparable à la partie concave 18a des figures 1 et 2.

Une deuxième partie de la face avant 111, repérée avec la référence 118b est une partie plane et correspond à la partie 18b des figures 1 et 2.

La face arrière 114 de la lentille acoustique est équipée de deux dispositifs piézo-électriques 112a, 112b associés respectivement aux première et deuxième parties 118a, 118b de la face avant. Les dispositifs piézo-électriques sont prévus pour émettre des ondes de signal et détecter des ondes réfléchies ou échos. Chaque ensemble formé par un dispositif piézo-électrique et d'une partie correspondante de la face avant est désigné dans la suite du

**EP 1 092 149 B1**

texte par "canal" du transducteur acoustique. Les canaux sont indépendants.

On observe que le premier dispositif piézo-électrique 112a est aligné avec la première partie 118a de la face avant selon un axe perpendiculaire à la face avant.

Lé deuxième dispositif piézo-électrique 112b est légèrement décalé de l'axe de la partie plane 118b de façon à être également en regard d'une fente 150 pratiquée dans le corps de la lentille acoustique 116 depuis l'un de ses côtés latéraux.

La fente 150 constitue un dioptre de référence tel que, par exemple, un dioptre verre-air lorsque la lentille est en verre. La fonction du dioptre est expliquée de façon plus détaillée dans la suite du texte.

On observe enfin une dépression 152 pratiquée dans la face avant 111 de la lentille acoustique. La dépression est emplie d'un matériau 154 d'adaptation d'impédance, par exemple une résine de type vinyl-ester. La surface libre du matériau est plane et affleure la face avant 111. La surface libre du matériau constitue, dans l'exemple illustré, la deuxième partie 118b (plane) de la face avant.

Le matériau d'adaptation d'impédance est choisi de façon à présenter une impédance acoustique la plus proche de l'impédance acoustique estimée du mélange à mesurer. Il est également choisi pour présenter une bonne adhérence, et une bonne tenue à l'agression des milieux avec lesquels il est mis en contact.

La face avant de la lentille acoustique peut également être recouverte d'une couche anti-reflet en un matériau dont l'impédance $Z_a$ est telle que $Z_a = \sqrt{Z_L.Z_C}$. On peut se reporter à ce sujet à la description qui précède.

Grâce à ses deux voies, le transducteur permet de mesurer séparément, et dans des conditions optimales, d'une part le pouvoir réflecteur de la phase continue et d'autre part sa densité ou la vitesse de propagation d'une onde dans celle-ci.

La première voie, correspondant à la partie concave de la face avant, permet d'établir un temps et une vitesse de propagation de l'onde dans la phase continue. En revanche, la deuxième voie, correspondant à une partie plane de la face avant, est utilisée pour mesurer le pouvoir réflecteur et donc l'impédance acoustique du milieu continu.

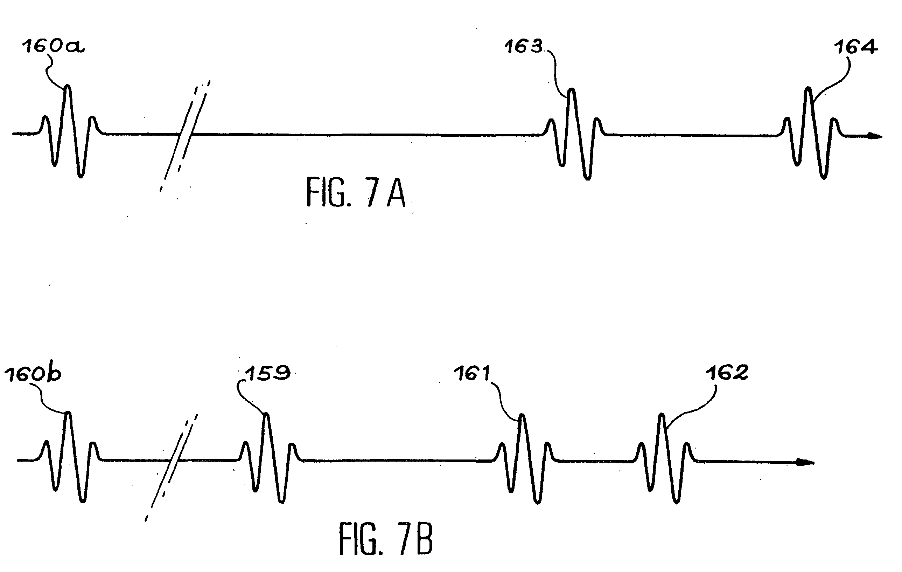

La figure 7A représente, de façon très schématique, les échos enregistrés par le premier dispositif piézo-électrique 112a de la première voie en réponse à une onde de signal 160a émise par ce dispositif.

Un premier écho 163 correspond à la réflexion de l'onde au niveau de la face avant 111 de la lentille acoustique 116 et un deuxième écho 164 correspond à une éventuelle réflexion de l'onde sur une goutte en suspension dans la phase continue.

Les échos sont exploités de la façon décrite précédemment en relation avec les figures 1 à 5.

La figure 7B représente également de façon schématique, les échos enregistrés par le deuxième dispositif piézo-électrique 112b de la deuxième voie en réponse à une onde 160b émise par ce dispositif.

Un premier écho 159 de référence correspond à une partie de l'onde qui subit une réflexion quasi-totale, ou tout au moins connue, sur le dioptre de référence constitué par la fente 150.

Un deuxième écho 161 correspond à une réflexion au niveau de l'interface verre-résine, c'est-à-dire à l'interface entre le corps de la lentille acoustique et le matériau d'adaptation d'impédance.

Un troisième écho 162 correspond à une réflexion de l'onde émise au niveau de l'interface résine-phase continue, c'est-à-dire entre le matériau d'adaptation d'impédance qui affleure à la face avant de la lentille et la phase continue.

L'écho de référence est utilisé pour connaître l'énergie ou l'amplitude de l'onde de signal initialement émise par le dispositif piézo-électrique.

En effet, les propriétés de réflexion du dioptre de référence étant connues, l'amplitude de l'écho de référence est proportionnelle à celle de l'onde initialement émise. Lorsque la réflexion sur le dioptre de référence est totale, l'amplitude de l'écho de référence est égale à celle de l'onde émise et peut être utilisée directement por établir le pouvoir réflecteur $R_C$ de la phase continue.

En effet, le pouvoir réflecteur $R_C$ est compris comme le rapport de l'amplitude de l'onde réfléchie, c'est-à-dire de l'onde correspondant au troisième écho 162, sur l'amplitude de l'onde émise.

Pour des raisons de simplification, les ondes représentées sur les figures 7A et 7B ne tiennent pas compte des pouvoirs réflecteurs des milieux et sont toutes représentées avec une amplitude identique.

De préférence, les deux canaux du transducteur acoustique ne sont pas actionnés simultanément. Une première série de mesures peut être effectuée dans un premier temps par la deuxième voie pour établir l'impédance acoustique de la phase continue. Puis, dans un deuxième temps, la deuxième voie peut être utilisée pour établir la vitesse de propagation dans la phase continue, et sa densité.

DOCUMENTS CITES

(1)

9

FR-A-2 478 314

(2)

US-A-4 726 211

## Revendications

1. Dispositif de mesure d'un temps de. propagation d'une onde acoustique dans une phase continue d'un mélange diphasique (28) comprenant une phase continue et une phase dispersée formant des gouttes ou des particules solides, liquides ou gazeuses (40) dans la phase continue, le dispositif comportant :

   - un transducteur électroacoustique (12) apte à émettre des ondes acoustiques (30) et délivrer un signal de réception d'ondes acoustiques réfléchies, et
   - des moyens d'exploitation des signaux du transducteur aptes à établir un temps de propagation à partir des signaux délivrés par le transducteur,

   **caractérisé en ce que** le dispositif comporte en outre des moyens de focalisation des ondes acoustiques en un point focal, ce point focal étant dans le mélange diphasique, et la fréquence des ondes acoustiques étant ajustée pour provoquer une réflexion des ondes sur une goutte ou une particule solide, liquide ou gazeuse de la phase dispersée, située sensiblement au point focal et des moyens agencés de telle sorte à calculer une vitesse de propagation à partir d'un temps de propagation et de la distance de localisation.

2. Dispositif selon la revendication 1, dans laquelle les moyens de focalisation comportent une lentille acoustique (16) avec une face d'émission (18).

3. Dispositif selon la revendication 2, dans lequel la face d'émission (11, 111) de la lentille acoustique comporte au moins une portion concave (18a, 118a), apte à focaliser les ondes acoustiques et une portion plane (186, 118b) apte à réfléchir les ondes non focalisées.

4. Dispositif selon la revendication 3, dans lequel la lentille acoustique comporte sur au moins une deuxième face opposée et parallèle à la face d'émission, un premier élément piézo-électrique (112a) associé à la partie concave (118a) de la face d'émission et un deuxième élément piézo-électrique (112b) associé à la partie plane (118b) de la face d'émission.

5. Dispositif selon la revendication 4, dans lequel la lentille comprend en outre un dioptre de référence (150) associé au deuxième élément piézo-électrique (118b).

6. Dispositif selon la revendication 3, dans lequel la lentille acoustique comprend une région en un matériau d'adaptation d'impédance (154) avec une surface libre, plane, affleurant la partie plane de la face d'émission.

7. Dispositif selon la revendication 6, dans lequel le matériau d'adaptation d'impédance est reçu dans une dépression (152) pratiquée dans la lentille acoustique depuis la face d'émission.

8. Dispositif selon la revendication 2, dans lequel la face d'émission comporte un revêtement antireflet.

9. Dispositif selon la revendication 2, dans lequel les moyens d'exploitation des signaux sont aptes à établir un temps de retard entre un premier signal (62) de réflexion sur la face d'émission de la lentille et un deuxième signal (64) de réflexion sur une goutte ou une particule solide, liquide ou gazeuse de phase dispersée, en réponse à une même onde acoustique émise.

10. Dispositif selon la revendication 1, dans lequel les moyens d'exploitation des signaux sont aptes en outre à établir une vitesse $V_c$ de propagation acoustique dans la phase continue selon la formule :

$$V_C = \frac{2F}{T}$$

où F est une distancs focale des moyens de focalisation et T le temps de propagation de l'onde.

**11.** Dispositif selon la revendication 2, dans lequel les moyens d'exploitation des signaux comportent des moyens de mesure d'une amplitude d'un signal réfléchi sur au moins une portion de la face d'émission de la lentille acoustique pour déterminer un pouvoir réflecteur $R_C$ du milieu continu.

**12.** Dispositif selon la revendication 1, dans lequel les moyens d'exploitation des signaux comportent en outre des moyens de mesure d'une amplitude d'un signal réfléchi sur une goutte ou une particule solide, liquide ou gazeuse de la phase dispersée pour déterminer un pouvoir réflecteur entre la phase continue et la phase dispersée.

**13.** Procédé de détermination de paramètres de propagation d'une onde acoustique dans la phase continue d'un mélange diphasique (28) comprenant une phase continue et une phase dispersée formant des gouttes ou des particules solides, liquides ou gazeuses (40) dans la phase continue, **caractérisé en ce que** :

- on émet dans la phase continue des ondes acoustiques (30) focalisées en un point focal, ce point focal étant dans le mélange diphasique, l'onde acoustique ayant une fréquence ajustée pour permettre une réflexion sur une goutte ou une particule solide, liquide ou gazeuse de la phase dispersée, située sensiblement au point focal,
- on enregistre des premiers signaux de réflexion des ondes sur la goutte ou sur la particule solide, liquide ou gazeuse,
- on établit un temps de propagation de l'onde à partir des signaux de réflexion, et
- on calcule la vitesse de propagation à partir du temps de propagation et de la distance de focalisation des ondes acoustiques.

**14.** Procédé selon la revendication 13, dans lequel on enregistre des deuxièmes signaux de réflexion d'une onde acoustique, réfléchie à une interface entre une lentille acoustique d'un transducteur électroacoustique et la phase continue, et on établit en outre un pouvoir réflecteur $R_c$ du milieu continu à partir d'une mesure de l'amplitude desdits deuxièmes signaux.

**15.** Procédé selon la revendication 14, dans lequel on établit en outre une impédance acoustique $Z_c$ de la phase continue à partir de la formule :

$$Z_C = Z_L \frac{1 - R_C}{1 + R_C},$$

où $Z_L$ est une impédance acoustique (connue) du matériau de la lentille acoustique.

**16.** Procédé selon la revendication 15, dans lequel on établit en outre une densité $\rho_c$ de la phase continue à partir de l'impédance acoustique $Z_c$ et de la vitesse de propagation acoustique de l'onde dans la phase continue selon la formule :

$$\rho_C = \frac{Z_C}{V_C}.$$

**17.** Procédé selon la revendication 13, dans lequel on établit un pouvoir réflecteur $R_D$ entre la phase continue et la phase dispersée à partir d'une mesure de l'amplitude desdits premiers signaux de réflexion.

**18.** Procédé selon les revendications 15 et 17, dans lequel on établit en outre une impédance acoustique $Z_D$ de la phase dispersée à partir de la formule :

$$Z_D = Z_C \frac{1 - R_D}{1 + R_D}.$$

**Patentansprüche**

**1.** Vorrichtung zum Messen einer Ausbreitungszeit einer akustischen Welle in einer kontinuierlichen Phase eines Zweiphasen-Gemisches (28), eine kontinuierliche Phase und eine dispergierte Phase umfassend, welche in der kontinuierlichen Phase Tröpfchen oder feste, flüssige oder gasförmige Teilchen (40) bildet, wobei diese Vorrichtung umfasst:

- einen elektroakustischen Transducer (12), fähig akustische Wellen (30) zu emittieren und ein Empfangssignal reflektierter akustischer Wellen zu liefern, und
- Auswertungseinrichtungen der Signale des Wandlers, fähig aufgrund der durch den Transducer gelieferten Signale eine Ausbreitungszeit zu ermitteln,

**dadurch gekennzeichnet,**
**dass** die Vorrichtung außerdem Einrichtungen zur Fokussierung der akustischen Wellen auf einen Fokus umfasst, wobei dieser Fokus sich in dem Zweiphasen-Gemisch befindet und die Frequenz der akustischen Wellen so angepasst wird, dass die Wellen von einem Tröpfchen oder einem festen, flüssigen oder gasförmigen Teilchen der dispergierten Phase reflektiert werden, das sich im Wesentlichen im Fokus befindet, sowie Einrichtungen umfasst, die fähig sind, eine Ausbreitungsgeschwindigkeit aufgrund einer Ausbreitungszeit und des Fokussierabstands zu berechnen.

2. Vorrichtung nach Anspruch 1, bei der die Fokussiereinrichtungen eine akustische Linse (16) mit einer Emissionsfläche (18) umfassen.

3. Vorrichtung nach Anspruch 2, bei der die Emissionsfläche (11, 111) der akustischen Linse wenigstens einen konkaven Teil (18a, 118a) umfasst, fähig die akustischen Wellen zu fokussieren, und einen planen Teil (18b, 118b), fähig die nichtfokussierten Wellen zu reflektieren.

4. Vorrichtung nach Anspruch 3, bei der die akustische Linse auf wenigstens einer der Emissionsfläche entgegengesetzten und zu ihr parallelen zweiten Fläche ein dem konkaven Teil (118a) der Emissionsfläche zugeordnetes erstes piezoelektrisches Element (112a) und ein dem planen Teil (118b) der Emissionsfläche zugeordnetes zweites piezoelektrisches Element (112b)umfasst.

5. Vorrichtung nach Anspruch 4, bei der die Linse außerdem einen dem zweiten piezoelektrischen Element (118b) zugeordneten Referenzdiopter (150) umfasst.

6. Vorrichtung nach Anspruch 3, bei der die akustische Linse einen Bereich aus einem Impedanzanpassungsmaterial (154) mit einer planen freien Oberfläche auf gleicher Höhe mit dem planen Teil der Emissionsfläche umfasst.

7. Vorrichtung nach Anspruch 6, bei der das Impedanzanpassungsmaterial in einer in der Emissionsfläche der akustischen Linse vorgesehenen Aussparung (152) sitzt.

8. Vorrichtung nach Anspruch 2, bei der die Emissionsfläche einen Antireflexionsüberzug umfasst.

9. Vorrichtung nach Anspruch 2, bei der die Signalauswertungseinrichtungen fähig sind, eine Verzögerungszeit zwischen einem ersten Signal (62) der Reflexion auf der Emissionsfläche der Linse und einem zweiten Signal (64) der Reflexion auf einem Tröpfchen oder einem festen, flüssigen oder gasförmigen Teilchen der dispergierten Phase als Reaktion auf eine selbe emittierte akustischen Welle zu ermitteln.

10. Vorrichtung nach Anspruch 1, bei der die Signalauswertungseinrichtungen außerdem fähig sind, eine Schallausbreitungsgeschwindigkeit $v_c$ in der kontinuierlichen Phase nach folgender Formel zu ermitteln:

$$v_C = 2F/T$$

wo F ein Fokussierabstand der Fokussiereinrichtungen ist und T die Ausbreitungszeit der Welle.

11. Vorrichtung nach Anspruch 2, bei der die Signalauswertungseinrichtungen Messeinrichtungen einer Amplitude eines auf wenigstens einem Teil der Emissionsfläche der akustischen Linse reflektierten Signals umfassen, um ein Reflexionsvermögen $R_C$ des kontinuierlichen Mediums zu bestimmen.

12. Vorrichtung nach Anspruch 1, bei der die Signalauswertungseinrichtungen außerdem Messeinrichtungen einer Amplitude eines auf einem Tröpfchen oder einem festen, flüssigen oder gasförmigen Teilchen der dispergierten Phase reflektierten Signals umfassen, um ein Reflexionsvermögen zwischen der kontinuierlichen Phase und der dispergierten Phase zu bestimmen.

**13.** Verfahren zur Bestimmung von Ausbreitungsparametem einer akustischen Welle in der kontinuierlichen Phase eines Zweiphasen-Gemisches (28), eine kontinuierliche Phase und eine dispergierte Phase umfassend, welche in der kontinuierlichen Phase Tröpfchen oder feste, flüssige oder gasförmige Teilchen (40) bildet,
**dadurch gekennzeichnet,**

- **dass** akustische Wellen (30) in die kontinuierliche Phase emittiert werden, fokussiert auf einen Fokus, wobei sich dieser Fokus in dem Zweiphasen-Gemisch befindet, und die akustische Welle eine angepasste Frequenz hat, um eine Reflexion auf einem im Wesentlichen in dem Fokus befindlichen Tröpfchen oder festen, flüssigen oder gasförmigen Teilchen der dispergierten Phase zu ermöglichen,
- **dass** erste Signale der Reflexion der Wellen auf dem Tröpfchen oder auf dem festen, flüssigen oder gasförmigen Teilchen aufgezeichnet werden,
- **dass** eine Ausbreitungszeit der Welle aufgrund der Reflexionssignale ermittelt wird, und
- **dass** die Ausbreitungsgeschwindigkeit aufgrund der Ausbreitungszeit und des Fokussierabstands der akustischen Wellen berechnet wird.

**14.** Verfahren nach Anspruch 13, bei dem man zweite Reflexionssignale einer akustischen Welle aufzeichnet, reflektiert von einer Grenzfläche zwischen einer akustischen Linse eines elektroakustischen Transducers und der kontinuierlichen Phase, und man außerdem ein Reflexionsvermögen $R_C$ des kontinuierlichen Mediums aufgrund einer Messung der Amplitude der genannten zweiten Signale ermittelt.

**15.** Verfahren nach Anspruch 14, bei dem man außerdem eine akustische Impedanz $Z_C$ der kontinuierlichen Phase nach folgender Formel ermittelt:

$$Z_C = Z_L \frac{1-R_C}{1+R_C},$$

wo $Z_L$ eine akustische Impedanz (bekannt) des Materials der akustischen Linse ist.

**16.** Verfahren nach Anspruch 15, bei dem man außerdem eine Dichte $\rho_c$ der kontinuierlichen Phase aufgrund der akustischen Impedanz $Z_c$ und der akustischen Ausbreitungsgeschwindigkeit der Welle in der kontinuierlichen Phase nach folgender Formel ermittelt:

$$\rho_C = Z_C/V_C.$$

**17.** Verfahren nach Anspruch 13, bei dem man ein Reflexionsvermögen $R_D$ zwischen der kontinuierlichen Phase und der dispergierten Phase aufgrund einer Messung der Amplitude der genannten ersten Reflexionssignale ermittelt.

**18.** Verfahren nach den Ansprüchen 15 und 17, bei dem man außerdem eine akustische Impedanz $Z_D$ der dispergierten Phase nach folgender Formel ermittelt:

$$Z_D = Z_C \frac{1-R_D}{1+R_D}.$$

## Claims

**1.** Device for measuring a propagation time of an acoustic wave in a continuous phase of a two-phase mix (28) comprising a continuous phase and a dispersed phase forming droplets or solid, liquid or gaseous particles (40) in the continuous phase, the device comprising:

- an electro-acoustic transducer (12) able to emit acoustic waves (30) and supply a reception signal of reflected acoustic waves and

- means for using the signals of the transducer able to establish a propagation time on the basis of the signals supplied by the transducer, **characterized in that** the device also comprises means for focusing acoustic waves at a focal point, which is located in the two-phase mix, the frequency of the acoustic waves being adjusted so as to bring about a reflection of the waves on one droplet or solid, liquid or gaseous particle of the dispersed phase essentially located at the focal point and means arranged in such a way as to calculate a propagation rate on the basis of a propagation time and the focusing distance.

2. Device according to claim 1, wherein the focusing means comprise an acoustic lens (16) with an emission face (18).

3. Device according to claim 2, wherein the emission face (11, 111) of the acoustic lens comprises at least a concave portion (18a, 118a) capable of focusing acoustic waves and a plane portion (18b, 118b) capable of reflecting non-focused waves.

4. Device according to claim 3, wherein the acoustic lens comprises a first piezoelectric element (112a) associated with the concave part (118a) of the emission face, on at least one second face opposite and parallel to the emission face, and a second piezoelectric element (112b) associated with the plane part (118b) of the emission face.

5. Device according to claim 4, wherein the lens also comprises a reference diopter (150) associated with the second piezoelectric element (118b).

6. Device according to claim 3, wherein the acoustic lens comprises a region made of an impedance matching material (154) with a free, plane surface flush with the plane part of the emission face.

7. Device according to claim 6, wherein the impedance matching material fits into a cavity (152) formed in the acoustic lens from the emission face.

8. Device according to claim 2, wherein the emission face comprises an antireflection coating.

9. Device according to claim 2, wherein the signal usage means are capable of setting up a delay time between a first reflection signal (62) on the emission face of the lens and a second reflection signal (64) on a droplet or a solid, liquid or gaseous particle of the dispersed phase in response to the same emitted acoustic wave.

10. Device according to claim 1, wherein the means of using the signals are also capable of determining an acoustic propagation velocity Vc in the continuous phase using the equation:

$$V_c = \frac{2F}{T}$$

where F is a focal distance of the focusing means and T is the wave propagation time.

11. Device according to claim 2, wherein the means of using the signals comprise means of measuring an amplitude of a signal reflected on at least one portion of the emission face of the acoustic lens to determine a reflection power Rc of the continuous medium.

12. Device according to claim 1, wherein the means of using the signals also comprise means of measuring an amplitude of a signal reflected on a droplet or a solid, liquid or gaseous droplet of the dispersed phase in order to determine a reflection power between the continuous phase and the dispersed phase.

13. Process for the determination of propagation parameters of an acoustic wave in the continuous phase of a two-phase mix (28) comprising a continuous phase and a dispersed phase forming droplets or solid, liquid or gaseous particles (40) in the continuous phase, **characterized in that**:

- in the continuous phase emission takes place of acoustic waves (30) focused at a focal point, which is located in the two-phase mix, the acoustic wave having an adjusted frequency so as to permit a reflection on a droplet or a solid, liquid or gaseous particle of the dispersed phase essentially located at the focal point,
- recording takes place of the first reflection signals of the waves on the droplet or on the solid, liquid or gaseous particle,

- a propagation time of the wave is established on the basis of reflection signals and
- a calculation takes place of the propagation rate on the basis of the propagation time and the focusing distance of the acoustic waves.

14. Process according to claim 13, wherein second reflection signals of an acoustic wave reflected at an interface between an acoustic lens of an electro-acoustic transducer and the continuous phase are recorded, and a reflection power $R_c$ of the continuous medium is also determined from a measurement of the amplitude of the said second signals.

15. Process according to claim 14, wherein an acoustic impedance $Z_c$ of the continuous phase is also determined, using the following equation:

$$Z_c = Z_L \frac{1-R_c}{1+R_c} \, ,$$

where $Z_L$ is an acoustic impedance (known) of the material from which the acoustic lens is made.

16. Process according to claim 15, wherein a density $\rho c$ of the continuous phase is also determined from the acoustic impedance $Z_c$ and the acoustic propagation velocity of the wave in the continuous phase is determined using the following equation:

$$\rho c = \frac{Z_c}{V_c}$$

17. Process according to claim 13, wherein a reflection power $R_D$ between the continuous phase and the dispersed phase is determined from a measurement of the amplitude of the said first reflection signals.

18. Process according to claims 15 and 17, wherein an acoustic impedance $Z_D$ of the dispersed phase can be calculated using the following equation:

$$Z_D = Z_C \frac{1-R_D}{1+R_D}$$

FIG. 1

FIG. 2

FIG. 3

AMPLITUDE

FIG. 5

FIG. 4

FIG. 6

FIG. 7 A

FIG. 7 B

EP 1 092 149 B1